# EUROPEAN PATENT APPLICATION

(11) **EP 3 643 487 A1**
(43) Date of publication of application: **29.04.2020**
(21) Application number: 18820420.0
(22) Date of filing: 07.06.2018
(51) Int. Cl.: B29D 30/08, B60C 9/20

(54) **PNEUMATIC TIRE PRODUCTION METHOD**

(30) Priority: 19.06.2017 JP 2017119878
(71) Applicant: Bridgestone Corporation, Tokyo 104-8340 (JP)
(72) Inventor: KON Seiji, Tokyo 104-8340 (JP); KOUNO Yoshihide, Tokyo 104-8340 (JP)
(74) Representative: Oxley, Robin John George
(86) International application number: PCT/JP2018/021880
(87) International publication number: WO 2018/235622

(57) **Abstract**

A manufacturing method of a pneumatic tire of the present disclosure is a manufacturing method of a pneumatic tire to manufacture the pneumatic tire comprising a resin-coated belt comprising a wire coated with a coating resin, the pneumatic tire comprises a base ring that comes in contact with a tire widthwise outer end of the resin-coated belt on an inner side of the resin-coated belt in a tire radial direction, and the manufacturing method comprises a base ring forming step of winding a ribbon member about a tire axis, to form the base ring.

## Description

### TECHNICAL FIELD

The present disclosure relates to a manufacturing method of a pneumatic tire.

### BACKGROUND

Heretofore, in a pneumatic tire, a belt has been usually disposed on an outer side of a carcass in a tire radial direction to exert a hoop effect of fastening the carcass and to heighten a rigidity of a tread (e.g., Patent Literature 1).

In recent years, demand for weight reduction of a tire has risen, and it has therefore been suggested that a wire coated with a coating resin is used as a belt. By use of such a resin-coated belt, the above function of the belt can be exerted while achieving the weight reduction, because the resin has a high rigidity for its weight.

### CITATION LIST

### Patent Literature

PTL 1: Japanese Patent Laid-Open No. 1998-035220

### SUMMARY

### (Technical Problem)

In a case where a resin-coated belt is used in a pneumatic tire, however, a tire circumferential rigidity sharply changes in a tire width direction and a difference in level of rigidity occurs with a tire widthwise end of the resin-coated belt as a boundary, due to a high rigidity of the resin-coated belt. Consequently, an end portion of the resin-coated belt is easily noticeably strained. It has been desired that occurrence of a failure in the end portion of the resin-coated belt due to the strain is inhibited. Furthermore, it is also considered that a member to relax the strain is provided, but it is laborious to prepare the member having an appropriate shape for each tire type or tire size.

Therefore, it is an object of the present disclosure to provide a manufacturing method of a pneumatic tire by which the pneumatic tire that inhibits occurrence of a failure in an end portion of a resin-coated belt is obtainable with a high productivity.

### (Solution to Problem)

A gist configuration of the present disclosure is as follows.

A manufacturing method of a pneumatic tire of the present disclosure is a manufacturing method of a pneumatic tire to manufacture the pneumatic tire comprising a resin-coated belt comprising a wire coated with a coating resin,
the pneumatic tire comprising a base ring that comes in contact with a tire widthwise outer end of the resin-coated belt on an inner side of the resin-coated belt in a tire radial direction,
the manufacturing method comprising a base ring forming step of winding a ribbon member about a tire axis, to form the base ring.

### (Advantageous Effect)

According to the present disclosure, there can be provided a manufacturing method of a pneumatic tire by which the pneumatic tire that inhibits occurrence of a failure in an end portion of a resin-coated belt is obtainable with a high productivity.

### BRIEF DESCRIPTION OF THE DRAWINGS

In the accompanying drawings:
FIG. 1 is a tire widthwise schematic partially cross-sectional view illustrating a tire widthwise half portion of a pneumatic tire obtainable by a manufacturing method of the pneumatic tire according to an embodiment of the present disclosure;
FIG. 2A is a schematic cross-sectional view of a base ring and a resin-coated belt obtainable by the manufacturing method of the pneumatic tire according to the embodiment of the present disclosure;
FIG. 2B is a schematic side view of the base ring obtainable by the manufacturing method of the pneumatic tire according to the embodiment of the present disclosure;
FIG. 3A is a schematic cross-sectional view of a base ring and a resin-coated belt obtainable by a manufacturing method of a pneumatic tire of a comparative example; and
FIG. 3B is a schematic side view of a base ring obtainable by a manufacturing method of a pneumatic tire of another comparative example.

### DETAILED DESCRIPTION

Hereinafter, embodiments of the present disclosure will be illustrated and described in detail with reference to the drawings.

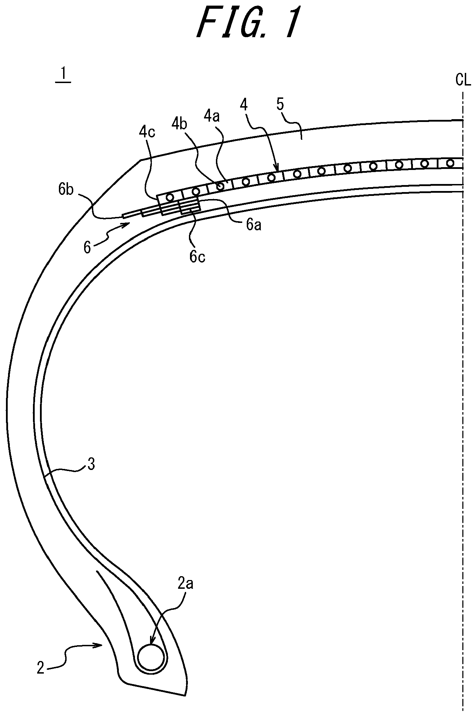

FIG. 1 is a tire widthwise schematic partially cross-sectional view illustrating a tire widthwise half portion of a pneumatic tire obtainable by a manufacturing method of the pneumatic tire according to an embodiment of the present disclosure. FIG. 1 only illustrates one tire widthwise half portion with a tire equatorial plane CL as a boundary, and omits depiction of the other half portion. The other half portion also has a similar configuration. This pneumatic tire 1 (hereinafter also referred to simply as the tire) comprises a resin-coated belt 4 comprising a wire 4b coated with a coating resin 4a, and a tread 5 in order on an outer side of a crown portion of a carcass 3 that toroidally straddles a bead core 2a embedded in a pair of bead portions 2 in a tire radial direction.

There are not any special restrictions on a tire structure of the pneumatic tire obtainable by the manufacturing method of the pneumatic tire of the present disclosure except that the structure comprises the above described resin-coated belt 4 and an after-mentioned base ring 6, and the structure can be configured using a usual rubber according to the convention.

For example, in an example illustrated in FIG. 1, the structure includes the bead core 2a formed by bundling steel wires, but there are not any special restrictions on a material and a shape of the bead core. Alternatively, the structure does not have to include the bead core 2a. Furthermore, in the present embodiment, the carcass 3 is formed with a carcass ply made of organic fibers, and there are not any special restrictions on a material or number of carcass plies.

In an example illustrated in FIG. 1, the resin-coated belt 4 is a spiral belt formed by spirally winding, about a tire axis, a resin-coated wire formed by coating the wire 4b with the coating resin 4a. Note that the resin-coated belt 4 is formed as the spiral belt, and can be therefore formed in a simple manner. It is preferable that the resin-coated belt 4 herein comprises one layer. A resin containing a wire has a high rigidity, and hence, a tread rigidity can be sufficiently heightened with the one layer, which is also preferable from a viewpoint of weight reduction. Furthermore, the reason is that the one layer is also preferable from the viewpoint of the weight reduction. The resin-coated belt 4 can have a tire widthwise width that is, for example, from 90 to 120% of a tire ground contact width.

In the wire 4b, an arbitrary known material can be used, and, for example, a steel cord can be used. The steel cord can be formed of, for example, a steel monofilament or a stranded wire. Furthermore, in the wire 4b, the organic fibers, carbon fibers or the like may be used.

Additionally, in the coating resin 4a, for example, a thermoplastic elastomer or a thermoplastic resin can be used, and a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 4a that coats the wire 4b has a tensile elastic modulus (prescribed in JIS K7113: 1995) of 50 MPa or more. Furthermore, it is preferable that the tensile elastic modulus of the coating resin 4a that coats the wire 4b is 1000 MPa or less. Note that the coating resin 4a mentioned herein does not contain a rubber (an organic polymer material that exhibits a rubber elasticity at normal temperature).

The spiral belt can be formed, for example, by coating an outer peripheral side of the wire 4b with the molten coating resin 4a, cooling and solidifying the resin to form the resin-coated wire, and welding and bonding, to each other, the resin-coated wires adjacent in an axial direction of an annular material formed by winding the resin-coated wire while melting the coating resin 4a by hot plate welding or the like. Alternatively, the spiral belt may be formed by bonding and joining, to each other, the resin-coated wires adjacent in the axial direction of the formed annular material with an adhesive or the like.

In the tire 1 illustrated in FIG. 1, a base ring 6 that comes in contact with a tire widthwise outer end 4c of the resin-coated belt 4 (at least a part of the ring is located at the same position as a position of the tire widthwise outer end 4c of the resin-coated belt 4 in the tire width direction) is provided on a tire radial inside of the resin-coated belt 4. In an example illustrated in FIG. 1, the base ring 6 is an annular member made of a resin (in this example, the member extends continuously in a tire circumferential direction). As the resin, the same resin as the coating resin 4a of the resin-coated belt 4 may be used, or a different resin may be used. Also in a case where the resin of the base ring 6 is different from the coating resin 4a of the resin-coated belt 4, the above illustrated thermoplastic elastomer or thermoplastic resin can be used as a material of the coating resin 4a.

As illustrated in FIG. 1, in this example, a tire widthwise inner end 6a of the base ring 6 is located on an inner side of the tire widthwise outer end 4c of the resin-coated belt 4 in the tire width direction, and a tire widthwise outer end 6b of the base ring 6 is located on an outer side of the tire widthwise outer end 4c of the resin-coated belt 4 in the tire width direction. In the present disclosure, it is preferable that a width of the base ring 6 in the tire width direction is 7% or more of a width of the resin-coated belt 4 in the tire width direction. When the percentage is 7% or more, the resin-coated belt 4 can be easily disposed during manufacturing (especially in a case where the spiral belt is wound). Furthermore, it is preferable that a central position of the base ring 6 in the tire width direction is a position of the tire widthwise outer end 4c of the resin-coated belt 4 or a tire widthwise position near the outer end. During the manufacturing, the resin-coated belt 4 can be easily disposed (especially in the case where the spiral belt is wound). Furthermore, the after-mentioned base ring 6 can securely exert an effect of decreasing a difference in level of rigidity between the resin-coated belt 4 and the rubber. A thickness of the base ring 6 can be from 0.5 to 2 mm, and a tire widthwise distance from the tire widthwise outer end 4c of the resin-coated belt 4 to each of the tire widthwise inner end and outer end of the base ring 6 can be 0 mm or more. Note that a size mentioned herein is measured in a state where the tire is installed to an applicable rim and charged with a prescribed internal pressure and no load (provided that "the tire ground contact width" is a tire widthwise distance between ground contact ends in a state where the tire is installed to the applicable rim, and charged with the prescribed internal pressure and no load, the ground contact end being a tire widthwise outermost position of a contact patch in a state where the tire is installed to an applicable rim and charged with the prescribed internal pressure and a maximum load). In the present description, "the applicable rim" indicates an approved rim (a measuring rim in Standards Manual of ETRTO, and a design rim in Year Book of TRA) in an applicable size described or to be described in future in an industrial standard valid in a district where the tire is produced and used, for example, JATMA Year Book of JATMA (the Japan Automobile Tyre Manufacturers Association) in Japan, Standards Manual of ETRTO (the European Tyre and Rim Technical Organisation) in Europe, or Year Book of TRA (the Tire and Rim Association, Inc.) in U.S. (That is, the above rim also includes a size that can be included in the above industrial standard in future, in addition to the existing size. Examples of "the size to be described in future" can include sizes described as "future developments" in 2013 edition of Standards Manual of ETRTO.) However, it is considered that a rim having a size that is not described in the above industrial standard is a rim having a width corresponding to a bead width of the tire. Additionally, "the prescribed internal pressure" indicates an air pressure (a maximum air pressure) corresponding to a tire maximum load capability of a standard such as JATMA described above in the tire of the applicable size. Note that in case of a size that is not described in the above industrial standard, "the prescribed internal pressure" is an air pressure (the maximum air pressure) corresponding to the maximum load capability prescribed for each vehicle to which the tire is installed. "The maximum load" means a load corresponding to the tire maximum load capability of the standard such as JATMA described above in the tire of the applicable size, or the maximum load capability prescribed for each vehicle to which the tire is installed in a case where the load has a size that is not described in the above industrial standard.

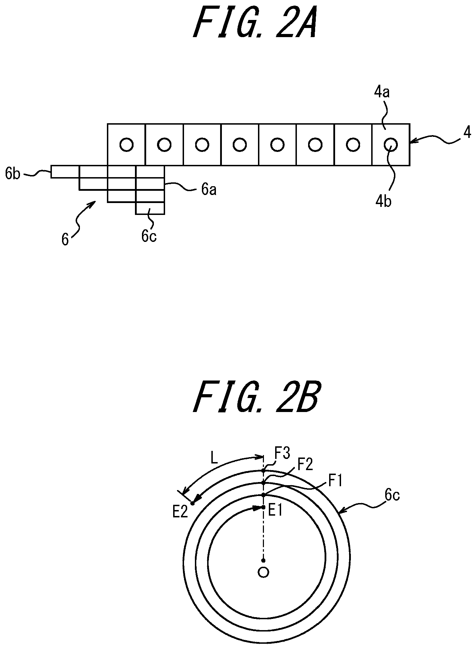

FIG. 2A is a schematic cross-sectional view of the base ring and the resin-coated belt obtainable by the manufacturing method of the pneumatic tire according to the embodiment of the present disclosure. FIG. 2B is a schematic side view of the base ring obtainable by the manufacturing method of the pneumatic tire according to the embodiment of the present disclosure.

In the manufacturing method of the pneumatic tire of the present embodiment, the base ring 6 is formed in a predetermined shape by winding a ribbon member 6c about a tire axis (a base ring forming step).

In an example illustrated in FIG. 2A, the base ring 6 has an almost triangular cross-sectional shape. More specifically, in this cross section, the ribbon members 6c are arranged in four columns in the tire width direction, and are stacked in one stack, two stacks, three stacks, and four stacks in the tire radial direction in order from a tire widthwise outer column. In such winding, for example, the ribbon member 6c is wound in four stacks in the tire radial direction, from a tire radially inner side on a tire widthwise innermost side, and then the ribbon member is wound in three stacks in the tire radial direction, from the tire radially inner side on a second column from a tire widthwise inner side. Next, the ribbon member is wound in two stacks in the tire radial direction, from the tire radially inner side on a third column from the tire widthwise inner side, and then the ribbon member is wound in one stack in the tire radial direction, from the tire radially inner side on a tire widthwise outermost side. On the other hand, in the present disclosure, there are not any special restrictions on the winding order of the ribbon member 6c in the base ring forming step.

Note that after the base ring 6 is formed, the resin-coated belt 4 is wound spirally based on the base ring 6 and formed, so that the resin-coated belt 4 can be further easily formed.

As illustrated in FIG. 2B, when E1 indicates a winding start end and E2 indicates a winding end edge, there are not any special restrictions on a length (an overlap length L) of the ribbon member 6c from an orbital position (a point F3 among points F1 to F3 in this example) located closest to a winding end edge E2 side to the winding end edge (a point E2 in this example). For example, the length can be from 1/100 to 2/3 of an orbital distance from the point F2 to the point F3. When the length is 1/100 or more of the orbital distance, an area where the coating resins come in contact with each other can increase between the adjacent ribbon members 6c. Consequently, for example, an adhesiveness or a welding force can be increased. On the other hand, when the length is 2/3 or less of the orbital distance, the base ring 6 can have a reduced weight.

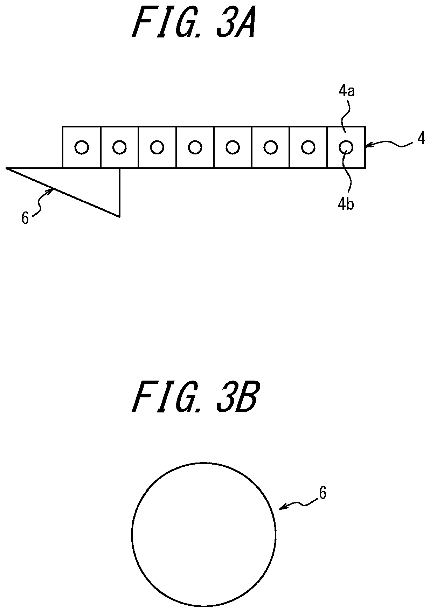

Hereinafter, description will be made as to operations and effects of the manufacturing method of the pneumatic tire of the present embodiment. Note that FIG. 3A for use in description is a schematic cross-sectional view of a base ring and a resin-coated belt obtainable by a manufacturing method of a pneumatic tire of a comparative example. FIG. 3B is a schematic side view of a base ring obtainable by a manufacturing method of a pneumatic tire of another comparative example.

In the example illustrated in FIG. 3A, a base ring 6 having a triangular cross-sectional shape suitable for a certain tire type or tire size is used. In the example illustrated in FIG. 3B, a base ring 6 of this example is injected and molded in an annular shape. However, if wide varieties of base rings 6 are prepared for respective tire types and tire sizes, there is a problem of a low productivity.

On the other hand, in the manufacturing method of the pneumatic tire of the present embodiment, the (e.g., standardized) ribbon member 6c is wound about the tire axis, thereby forming the base ring 6 having an almost triangular cross-sectional shape. Consequently, depending on a winding method of the (e.g., standardized) ribbon member 6c, that is, every time, for example, the number of the tire widthwise columns and/or the number of the stacks of the ribbon member 6c, a size of the cross section of the ribbon member 6c, and the like are suitably selected, the base ring 6 having the shape or the size corresponding to the tire type or the tire size can be formed. Consequently, the productivity heightens as compared with, for example, a case of preparing wide varieties of base rings 6 molded beforehand, for example, by injection molding.

Note that in the example illustrated in FIG. 2A, the base ring 6 has the almost triangular cross-sectional shape (specifically, as described above, the ribbon members 6c are arranged in four columns in the tire width direction in this cross section, and formed in four stacks, three stacks, two stacks, and one stack in order from the tire widthwise innermost column), so that the shape of the base ring closely resembles the triangular cross-sectional shape of the base ring illustrated in FIG. 3A in case of the injection molding. Consequently, the shape or the size of the base ring 6 can be variously adjusted in accordance with the number of the columns or the number of the stacks in winding the ribbon member 6c, and the size or the like of the cross section of the ribbon member 6c.

Furthermore, in the present embodiment, the formed base ring 6 is disposed in contact with the tire widthwise outer end 4c of the resin-coated belt 4 on the inner side of the resin-coated belt 4 in the tire radial direction, so that the difference in level of rigidity between the resin-coated belt 4 and the rubber can be decreased.

As described above, according to the manufacturing method of the pneumatic tire of the present disclosure, the pneumatic tire in which occurrence of a failure in an end portion of the resin-coated belt 4 is inhibited is obtainable with a high productivity.

In the present disclosure, it is preferable that the base ring 6 is made of the resin. The reason is that the resin has a high rigidity for its weight, and can therefore further exert an effect of decreasing the difference in level of rigidity between the resin-coated belt 4 and the rubber while achieving weight reduction of the base ring 6 that forms a member of the pneumatic tire. Furthermore, in the present disclosure where the base ring 6 is formed by winding the ribbon member 6c, the resin is used as a material, and the ribbon member 6c is wound while joining the ribbon members 6c to each other by welding (e.g., by hot plate welding or the like), bonding or the like, so that operability in the base ring forming step can improve. Thus, the resin is used as the material of the base ring 6, so that the pneumatic tire in which the occurrence of the failure in the end portion of the resin-coated belt 4 is inhibited is obtainable with a higher productivity. Furthermore, the use of the resin is also advantageous for the weight reduction of the base ring 6.

As above, the embodiment of the present disclosure has been described, but the present disclosure is not limited to the above embodiment. For example, in the example illustrated in FIG. 2A, the base ring 6 has the almost triangular cross-sectional shape (specifically, as described above, the ribbon members 6c are arranged in four columns in the tire width direction in this cross section, and formed in four stacks, three stacks, two stacks, and one stack in order from the tire widthwise innermost column), but the base ring can be formed in various shapes. The base ring 6 can be formed to have an almost rectangular cross-sectional shape so that the ribbon members 6c are arranged in three columns in the tire width direction in this cross section and include three stacks in each column. Alternatively, the base ring 6 can be formed as the base ring 6 having an almost triangular cross-sectional shape so that the ribbon members 6c are arranged in four columns in the tire width direction in this cross section, and formed in four stacks, three stacks, two stacks, and one stack in order from a tire widthwise outermost column. Furthermore, the ribbon member 6c may contain a wire made of a metal, organic fibers or the like.

### REFERENCE SIGNS LIST

- 1: pneumatic tire
- 2: bead portion
- 2a: bead core
- 3: carcass
- 4: resin-coated belt
- 4a: coating resin
- 4b: wire
- 4c: tire widthwise outer end of the resin-coated belt
- 5: tread
- 6: base ring
- 6a: tire widthwise inner end of the base ring
- 6b: tire widthwise outer end of the base ring
- 6c: ribbon member
- CL: tire equatorial plane

## Claims

1. A manufacturing method of a pneumatic tire to manufacture the pneumatic tire comprising a resin-coated belt comprising a wire coated with a coating resin,
the pneumatic tire comprising a base ring that comes in contact with a tire widthwise outer end of the resin-coated belt on an inner side of the resin-coated belt in a tire radial direction,
the manufacturing method comprising a base ring forming step of winding a ribbon member about a tire axis, to form the base ring.

2. The manufacturing method of the pneumatic tire according to claim 1, wherein the base ring is made of a resin.
